# EUROPEAN PATENT APPLICATION

(11) **EP 4 837 650 A1**
(43) Date of publication of application: **11.11.2026**
(21) Application number: 25867893.7
(22) Date of filing: 10.09.2025
(51) Int. Cl.: B01D 53/18, B01D 53/14, C25B 9/23, C25B 9/60, C25B 1/04

(54) **ELECTROLYTIC HYDROGEN PRODUCTION SYSTEM COUPLED WITH CAPTURING CARBON DIOXIDE FROM FLUE GAS**

(30) Priority: 18.09.2024 CN 202411301930
(71) Applicant: Huaneng Clean Energy Research Institute, Beijing 102209 (CN)
(72) Inventor: LU, Qichen, Beijing 102209 (CN); LIU, Hanming, Beijing 102209 (CN); WANG, Xiaolong, Beijing 102209 (CN); XIAO, Ping, Beijing 102209 (CN); GAO, Shiwang, Beijing 102209 (CN); GUO, Dongfang, Beijing 102209 (CN); LIU, Peng, Beijing 102209 (CN); FAN, Zian, Beijing 102209 (CN)
(74) Representative: Luo, Runhan
(86) International application number: PCT/CN2025/120484
(87) International publication number: WO 2026/061302

(57) **Abstract**

The present disclosure provides a flue gas carbon dioxide capture coupled with electrolytic hydrogen production system and method. The system absorbs carbon dioxide in flue gas through an absorption apparatus to obtain an absorption liquid. The absorption liquid enters an anode chamber to obtain a gas-liquid mixture containing carbon dioxide. The gas-liquid mixture enters a first gas-liquid separation apparatus for separation to obtain carbon dioxide and a first separation liquid. The first separation liquid enters an intermediate chamber. Under the action of ion exchange, regeneration of an absorbent is realized. The regenerated absorbent returns to the absorption apparatus again to continue absorbing carbon dioxide. The absorption and capture process of carbon dioxide in flue gas is coupled with the electrolytic hydrogen production process. While capturing carbon dioxide, hydrogen is collected, thereby improving energy efficiency, saving energy, reducing operating costs, and conforming to the concept of green environmental protection. The purification and collection of hydrogen are performed separately in a cathode chamber and do not participate in carbon dioxide capture. This avoids the risk of explosion caused by hydrogen mixing with the absorption liquid, entering the anode chamber, and mixing with oxygen, thus increasing safety.

## Description

The present disclosure claims priority to Chinese Patent Application No. 202411301930.0, filed to the China National Intellectual Property Administration on September 18, 2024 and entitled "Electrochemical Carbon Dioxide Capture System and Method Coupled with High-Purity Hydrogen Preparation", the disclosure of which is hereby incorporated by reference in its entirety.

### Technical Field

The present disclosure belongs to the technical field of gas purification and separation, and specifically relates to a flue gas carbon dioxide capture coupled with electrolytic hydrogen production system and method.

### Background

Carbon dioxide (CO₂) is a major greenhouse gas causing global warming. The capture, utilization, and storage of CO₂ have become one of the hot topics of concern to the international community. CO₂ emissions from coal-fired power generation in China account for about 50% of total industrial emissions. The capture and separation of CO₂ from flue gas of coal-fired power plants is an important field for reduction of greenhouse gas emission. In addition, a large number of CO₂ capture or separation processes also exist in industrial fields such as steelmaking, cement, and chemical industry (e.g., ammonia synthesis, hydrogen production, natural gas purification). Methods for capturing CO₂ mainly include absorption, adsorption, membrane separation, and low-temperature separation. Among them, the absorption method is currently the most mature CO₂ capture and separation technology expected to achieve large-scale commercial application.

Existing CO₂ absorption capture and separation technologies have high energy consumption and operating costs during application. In particular, the steam heat energy consumed for absorbent regeneration accounts for a large proportion of the entire system's energy consumption, which does not conform to the concept of green environmental protection. In addition, in the electrolytic regeneration link, the consumed electrical energy is only used for absorbent regeneration, resulting in low energy utilization efficiency.

While capturing and separating carbon dioxide, oxygen and hydrogen are generated. Hydrogen is also a target gas.

However, existing CO₂ absorption capture and separation methods do not purify and collect the generated hydrogen, resulting in wasted resources. Moreover, there is a risk of explosion when the generated hydrogen mixes with the circulating solution, enters the anode chamber, and mixes with oxygen, thus posing a safety hazard.

In view of the above problems, it is necessary to propose a flue gas carbon dioxide capture coupled with electrolytic hydrogen production system and method that is reasonably designed and effectively solves the above problems.

### Summary

The present disclosure aims to solve at least one of the technical problems existing in the related art and provides a flue gas carbon dioxide capture coupled with electrolytic hydrogen production system and method.

One aspect of the present disclosure provides a flue gas carbon dioxide capture coupled with electrolytic hydrogen production system, including an absorption apparatus, an electrolytic hydrogen production apparatus, a first gas-liquid separation apparatus, and a second gas-liquid separation apparatus; an absorbent is provided in the absorption apparatus and is used for absorbing carbon dioxide, and the electrolytic hydrogen production apparatus includes an anode chamber, an intermediate chamber, and a cathode chamber which are separated by an anion exchange membrane, where the anode chamber employs an oxygen evolution electrode, and the cathode chamber employs a hydrogen evolution electrode; a first inlet of the absorption apparatus is configured to communicate with flue gas containing carbon dioxide, a first outlet of the absorption apparatus communicates with an inlet of the anode chamber through an absorption liquid pipeline, an outlet of the anode chamber communicates with an inlet of the first gas-liquid separation apparatus through a gas-liquid mixture pipeline, a first outlet of the first gas-liquid separation apparatus communicates with an inlet of the intermediate chamber through a first separation liquid pipeline, and an outlet of the intermediate chamber communicates with a second inlet of the absorption apparatus through an absorbent pipeline, so as to realize a regeneration cycle of the absorbent; an inlet of the second gas-liquid separation apparatus communicates with an outlet of the cathode chamber through a hydrogen-containing solution pipeline, a first outlet of the second gas-liquid separation apparatus communicates with an inlet of the cathode chamber through a second separation liquid pipeline, a second outlet of the second gas-liquid separation apparatus communicates with a first exhaust pipeline, so as to realize independent separation and discharge of hydrogen; a second outlet of the first gas-liquid separation apparatus communicates with a second exhaust pipeline to discharge the separated carbon dioxide, and a second outlet of the absorption apparatus communicates with a purified gas pipeline to discharge purified gas.

Another aspect of the present disclosure provides a flue gas carbon dioxide capture coupled with electrolytic hydrogen production method, employing the flue gas carbon dioxide capture coupled with electrolytic hydrogen production system described above. The method includes: transporting flue gas containing carbon dioxide to the absorption apparatus, and absorbing carbon dioxide in the flue gas through the absorbent in the absorption apparatus to obtain an absorption liquid and purified gas; transporting the absorption liquid to the anode chamber of the electrolytic hydrogen production apparatus, and obtaining a gas-liquid mixture containing carbon dioxide under the action of the oxygen evolution electrode; performing gas-liquid separation treatment on the gas-liquid mixture containing carbon dioxide through the first gas-liquid separation apparatus to obtain carbon dioxide gas and a first separation liquid, discharging the separated carbon dioxide, and transporting the separation liquid to the intermediate chamber, where the separation liquid in the intermediate chamber obtains an absorbent through ion exchange of the anion exchange membrane to realize regeneration of the absorbent, and transporting the regenerated absorbent to the absorption apparatus to continue absorbing carbon dioxide; and transporting the hydrogen-containing solution in the cathode chamber to the first gas-liquid separation apparatus to obtain hydrogen and a second separation liquid, discharging the separated hydrogen through the first exhaust pipeline, and transporting the second separation liquid to the inlet of the cathode chamber, so as to realize independent separation and discharge of hydrogen.

Regarding the flue gas carbon dioxide capture coupled with electrolytic hydrogen production system and method of the present disclosure, the system of the present disclosure couples the absorption and capture process of carbon dioxide in flue gas with the electrolytic hydrogen production process. While capturing carbon dioxide, hydrogen is purified and collected, thereby improving energy efficiency, saving energy, reducing operating costs, and conforming to the concept of green environmental protection. The purification and collection of hydrogen are performed separately in the cathode chamber and do not participate in the carbon dioxide capture system. This avoids the risk of explosion caused by hydrogen mixing with the absorption liquid, entering the anode chamber, and mixing with oxygen, thus increasing safety in the carbon dioxide capture and hydrogen production processes.

### Brief Description of the Drawings

Fig. 1 is a schematic structural diagram of a flue gas carbon dioxide capture coupled with electrolytic hydrogen production system according to an embodiment of the present disclosure.
Fig. 2 is a schematic structural diagram of a flue gas carbon dioxide capture coupled with electrolytic hydrogen production system according to another embodiment of the present disclosure.

### Detailed Description of the Embodiments

To enable those skilled in the art to better understand the technical solutions of the present disclosure, detailed description of the present disclosure is further provided below in conjunction with the accompanying drawings and specific implementations.

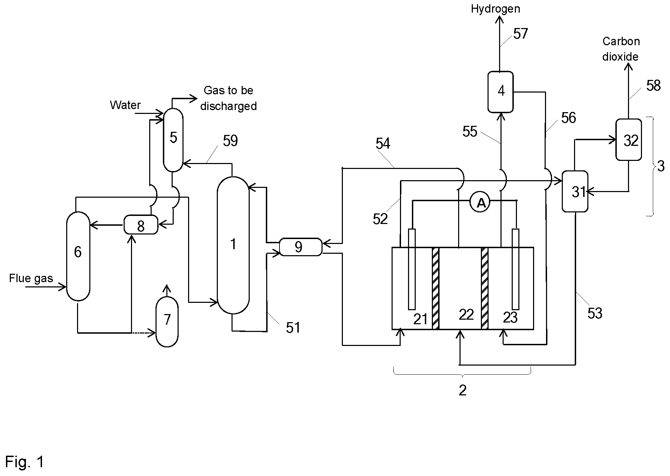

As shown in Fig. 1, one aspect of the present disclosure provides a flue gas carbon dioxide capture coupled with electrolytic hydrogen production system, including an absorption apparatus 1, an electrolytic hydrogen production apparatus 2, a first gas-liquid separation apparatus 3, and a second gas-liquid separation apparatus 4.

An absorbent is provided in the absorption apparatus 1 and is used for absorbing carbon dioxide. The electrolytic hydrogen production apparatus 2 includes an anode chamber 21, an intermediate chamber 22, and a cathode chamber 23 which are separated by an anion exchange membrane 24, where the anode chamber 21 employs an oxygen evolution electrode and can generate oxygen in the anode chamber 21; and the cathode chamber 23 employs a hydrogen evolution electrode and can generate hydrogen in the cathode chamber 23.

It should be noted that the absorbent may employ an ammonia-containing solution, but the type of absorbent is not limited to ammonia and may also be organic amines, amino acids, etc., which can be selected according to actual needs. In some embodiments, an ammonia-containing solution is taken as an example of the absorbent for illustration.

It should be further noted that the oxygen evolution electrode may employ, but is not limited to, a ruthenium oxide electrode, an iridium oxide electrode, a nickel-iron alloy electrode, a nickel-iron oxide electrode, etc. The hydrogen evolution electrode may employ, but is not limited to, a platinum-carbon electrode, a platinum-ruthenium-carbon electrode, a nickel-molybdenum alloy electrode, a nickel-molybdenum oxide electrode, etc. The materials for the oxygen evolution electrode and the hydrogen evolution electrode are not limited In some embodiments and can be selected according to actual needs.

A first inlet of the absorption apparatus 1 is configured to communicate with flue gas containing carbon dioxide, a first outlet of the absorption apparatus 1 communicates with an inlet of the anode chamber 21 through an absorption liquid pipeline 51, an outlet of the anode chamber 21 communicates with an inlet of the first gas-liquid separation apparatus 3 through a gas-liquid mixture pipeline 52, a first outlet of the first gas-liquid separation apparatus 3 communicates with an inlet of the intermediate chamber 22 through a first separation liquid pipeline 53, and an outlet of the intermediate chamber 22 communicates with a second inlet of the absorption apparatus 1 through an absorbent pipeline 54, so as to realize a regeneration cycle of the absorbent.

Alternatively, as shown in Fig. 1, flue gas containing carbon dioxide enters the absorption apparatus 1 through the first inlet of the absorption apparatus 1. The absorbent in the absorption apparatus 1 absorbs carbon dioxide to obtain an absorption liquid and purified gas. The absorption liquid is a liquid with a high carbon dioxide load obtained after the absorbent absorbs carbon dioxide, and the purified gas refers to the gas obtained after carbon dioxide is removed from the flue gas.

The absorption liquid enters the anode chamber 21 through the absorption liquid pipeline 51. Oxygen is generated at the oxygen evolution electrode of the anode chamber 21. The oxygen evolution electrode undergoes the reaction: 4OH⁻-4e⁻=O₂↑+2H₂O, and the hydrogen evolution electrode undergoes the reaction: 4H₂O+4e⁻=2H₂↑+4OH⁻. The concentration of OH⁻ near the oxygen evolution electrode decreases, the acidity of the reaction liquid increases, and CO₂ is desorbed to obtain a gas-liquid mixture containing carbon dioxide. The gas-liquid mixture containing carbon dioxide in the anode chamber 21 is transported to the first gas-liquid separation apparatus 3 through the gas-liquid mixture pipeline 52 for separation to obtain carbon dioxide gas and a first separation liquid. The first separation liquid enters the intermediate chamber 22 through the first separation liquid pipeline 53. OH- generated by the hydrogen evolution cathode enters the intermediate chamber 23 through the anion exchange membrane 24. The alkalinity of the solution in the intermediate chamber 23 increases to obtain an absorbent, realizing regeneration of the absorbent. The regenerated absorbent enters the absorption apparatus 1 from the intermediate chamber 22 through the absorbent pipeline 54 to continue providing absorbent for the absorption apparatus 1 and continue realizing absorption of carbon dioxide.

As shown in Fig. 1, an inlet of the second gas-liquid separation apparatus 4 communicates with an outlet of the cathode chamber 23 through a hydrogen-containing solution pipeline 55, a first outlet of the second gas-liquid separation apparatus 4 communicates with an inlet of the cathode chamber 23 through a second separation liquid pipeline 56, and a second outlet of the second gas-liquid separation apparatus 4 communicates through a first exhaust pipeline 57, so as to realize independent separation and discharge of hydrogen.

In some embodiments, the second gas-liquid separation apparatus 4 is a gas-liquid separator, and the gas-liquid separator separates and purifies a solution containing hydrogen to obtain purified hydrogen. Alternatively, the hydrogen-containing solution generated in the cathode chamber 23 is transported to the second gas-liquid separation apparatus 4 through the hydrogen-containing solution pipeline 55. The second gas-liquid separation apparatus 4 performs purified separation on the hydrogen-containing solution to obtain hydrogen and a second separation liquid, where the obtained hydrogen is discharged through the first exhaust pipeline 57 for next-step hydrogen collection. The obtained second separation liquid enters the cathode chamber 23 again through the second gas-liquid separation apparatus 4 to perform hydrogen preparation and separation purification again, realizing independent separation and discharge of hydrogen.

In some embodiments, the purification and collection of hydrogen are performed separately in the cathode chamber and do not participate in the carbon dioxide capture system. This avoids the risk of explosion caused by hydrogen mixing with the absorption liquid, entering the anode chamber, and mixing with oxygen, thus increasing safety in the carbon dioxide capture and hydrogen production processes.

A second outlet of the first gas-liquid separation apparatus 3 communicates with a second exhaust pipeline 58 to discharge the separated carbon dioxide, and a second outlet of the absorption apparatus 1 communicates with a purified gas pipeline 59 to discharge purified gas.

In the flue gas carbon dioxide capture coupled with electrolytic hydrogen production system of the present disclosure, the absorption and capture process of carbon dioxide in flue gas is coupled with the electrolytic hydrogen production process. While capturing carbon dioxide, hydrogen is purified and collected, thereby improving energy efficiency, saving energy, reducing operating costs, and conforming to the concept of green environmental protection. The purification and collection of hydrogen are performed separately in the cathode chamber and do not participate in the carbon dioxide capture system. This avoids the risk of explosion caused by hydrogen mixing with the absorption liquid, entering the anode chamber, and mixing with oxygen, thus increasing safety in the carbon dioxide capture and hydrogen production processes.

Exemplarily, as shown in Fig. 1, the first gas-liquid separation apparatus 3 includes a flash tank 31 and a condenser 32. A gas-liquid mixture inlet of the flash tank 31 communicates with the outlet of the anode chamber 21. A gas-to-be-condensed inlet of the condenser 32 communicates with a gas-to-be-condensed outlet of the flash tank 31. A condensed liquid inlet of the flash tank 31 communicates with a condensed liquid outlet of the condenser 32. The inlet of the intermediate chamber 22 communicates with a separation liquid outlet of the flash tank 31. A top of the condenser 32 communicates with the second exhaust pipeline 58 to discharge the separated carbon dioxide. The first separation liquid is a mixture of an initial separation liquid and a condensed liquid. The initial separation liquid is the liquid substance obtained by flashing in the flash tank 31, and the condensed liquid is the liquid substance obtained by condensation in the condenser 32.

In some embodiments, the gas-liquid separation unit 3 includes the flash tank 31 and the condenser 32. The gas-liquid mixture can be separated through the flash tank 31 and the condenser 32, reducing ammonia loss and reducing the energy consumption of the entire system.

Exemplarily, as shown in Fig. 1, the flue gas carbon dioxide capture coupled with electrolytic hydrogen production system of the present disclosure further includes a washing apparatus 5. A first inlet of the washing apparatus 5 communicates with the second outlet of the absorption apparatus 1 through the purified gas pipeline 59. A second inlet of the washing apparatus 5 is configured to communicate with a washing water source. A first outlet of the washing apparatus 5 communicates with a gas discharge pipeline.

Alternatively, purified gas generated in the absorption apparatus 1 may contain residual ammonia gas. The purified gas containing ammonia gas is transmitted to the washing apparatus 5 through the purified gas pipeline 59. Washing water enters the washing apparatus 5 through the second inlet to wash the purified gas containing ammonia gas, so as to separate and recover the residual ammonia gas. The separated ammonia gas exists in the form of an ammonia-containing washing liquid to obtain an absorbent and a gas to be discharged. The gas to be discharged is discharged through a gas discharge pipeline 46.

Exemplarily, as shown in Fig. 1, the flue gas carbon dioxide capture coupled with electrolytic hydrogen production system of the present disclosure includes a desulfurization apparatus 6. A first inlet of the desulfurization apparatus 6 is configured to communicate with flue gas containing carbon dioxide. The flue gas containing carbon dioxide first enters the desulfurization apparatus 6 for pretreatment of flue gas desulfurization to obtain a desulfurization liquid.

A first outlet of the desulfurization apparatus 6 communicates with the first inlet of the absorption apparatus 1. The flue gas after desulfurization treatment enters the absorption apparatus 1 for absorption and capture of carbon dioxide.

A second inlet of the desulfurization apparatus 6 communicates with a second outlet of the washing apparatus 5. The ammonia gas separated in the washing apparatus 5 is transported from the washing apparatus 5 to the desulfurization apparatus 6 in the form of an ammonia-containing washing liquid.

A reflux outlet of the desulfurization apparatus 6 communicates with a reflux inlet of the washing apparatus 5. The height of the reflux inlet is lower than the height of the second inlet.

Alternatively, the separated ammonia combines with sulfur dioxide in the flue gas to exist in the form of a desulfurization liquid. The desulfurization liquid that has not reached a saturated state flows back from the desulfurization apparatus 6 to the washing apparatus 5 to wash the purified gas, and is then transported from the washing apparatus 5 to the desulfurization apparatus 6 along with the separated ammonia-containing washing liquid, forming a circulation loop.

It should be noted that the purified gas can be washed by employing a circulating desulfurization liquid, or by employing externally supplemented water. Of course, both the desulfurization liquid and externally supplemented water can be employed together to wash the purified gas, which can be selected according to actual needs.

Exemplarily, as shown in Fig. 1, the flue gas carbon dioxide capture coupled with electrolytic hydrogen production system of the present disclosure further includes a recovery apparatus 7. An inlet of the recovery apparatus 7 communicates with the reflux outlet of the desulfurization apparatus 6, so as to transport liquid substances in the desulfurization apparatus 6 to the recovery apparatus 7 for processing when the desulfurization liquid in the desulfurization unit reaches saturation.

Alternatively, in response to needing to configure the desulfurization liquid reaches saturation, the liquid substances in the desulfurization apparatus 6 can be transported to the recovery apparatus 7 for processing to obtain a utilization product of sulfur dioxide. For example, the utilization product of sulfur dioxide can be an ammonium sulfate fertilizer product. Recycling and reutilization of the desulfurization liquid are realized through the recovery apparatus 7, saving resources.

Exemplarily, as shown in Fig. 1, the flue gas carbon dioxide capture coupled with electrolytic hydrogen production system of the present disclosure further includes a first heat exchange apparatus 8. The first heat exchange apparatus 8 communicates with the washing apparatus 5 and the desulfurization apparatus 6 respectively, and is configured for heat exchange between the washing apparatus 5 and the desulfurization apparatus 6.

Alternatively, the ammonia-containing washing liquid and the desulfurization liquid can undergo heat exchange through the first heat exchange apparatus 8. The heat exchange between the ammonia-containing washing liquid and the desulfurization liquid is performed through the first heat exchange apparatus 8 and is used for transferring heat from the desulfurization liquid to the ammonia-containing washing liquid. In addition, after undergoing heat exchange, the ammonia-containing washing liquid can be continuously heated through a heating component during the process of being transported to the desulfurization apparatus 6 to promote the desulfurization treatment in the desulfurization apparatus 6. After undergoing heat exchange, the desulfurization liquid can be continuously cooled by a cooling component during the process of being transported to the washing apparatus 5.

In some embodiments, the thermal utilization rate of the entire system is improved through the first heat exchange apparatus, saving energy.

Exemplarily, as shown in Fig. 1, the flue gas carbon dioxide capture coupled with electrolytic hydrogen production system of the present disclosure further includes a second heat exchange apparatus 9. The second heat exchange apparatus 9 communicates with the absorption apparatus 1 and the electrolytic hydrogen production apparatus 2 respectively, and is configured for heat exchange between the absorption apparatus 1 and the electrolytic hydrogen production apparatus 2.

Alternatively, the second heat exchange apparatus 9 includes a cold end inlet, a cold end outlet, a hot end inlet, and a hot end outlet. The cold end inlet of the second heat exchange apparatus 9 communicates with the second outlet of the absorption apparatus 1. The hot end outlet of the second heat exchange apparatus 9 communicates with the inlet of the anode chamber 21. The hot end inlet of the second heat exchange apparatus 9 communicates with the outlet of the intermediate chamber 23. The cold end outlet of the second heat exchange apparatus 9 communicates with the second inlet of the absorption apparatus 1.

In some embodiments, the absorbent and the absorption liquid only undergo heat exchange through the second heat exchange apparatus 9. Heat from the absorbent is transferred to the absorption liquid. The absorbent and the absorption liquid are isolated from each other in the second heat exchange apparatus 9. A transport channel between the cold end outlet of the second heat exchange apparatus 9 and the absorbent inlet of the absorption apparatus 1 is configured to transport the absorbent to the absorption apparatus 1, and a cooling component can be installed on this transport channel. A transport channel between the hot end outlet of the second heat exchange apparatus 9 and the inlet of the anode chamber 21 is configured to transport the absorption liquid to the anode chamber 21, and a heating component can be installed on this transport channel.

Exemplarily, the absorption apparatus includes an absorption part, a condensation part, and an isolation plate isolating the absorption part and the condensation part. The absorption part is located at the bottom of the absorption apparatus, and the condensation part is located at the top of the absorption apparatus. The isolation plate allows gas to pass through but blocks liquid substances from passing through. The material of the isolation plate can be a Polytetrafluoroethylene (PTFE) film. Preferably, the material of the isolation plate can be a PTFE film from Teflon.

A flue gas inlet of the absorption part is configured to communicate with flue gas containing carbon dioxide. An absorbent inlet of the absorption part is configured to communicate with the outlet of the intermediate chamber. An absorption liquid outlet of the condensation part communicates with the absorption liquid pipeline. A gas outlet of the condensation part communicates with the purified gas pipeline.

It should be noted that the specific structural features of the absorption apparatus are not Alternatively limited In some embodiments and can be selected according to actual needs.

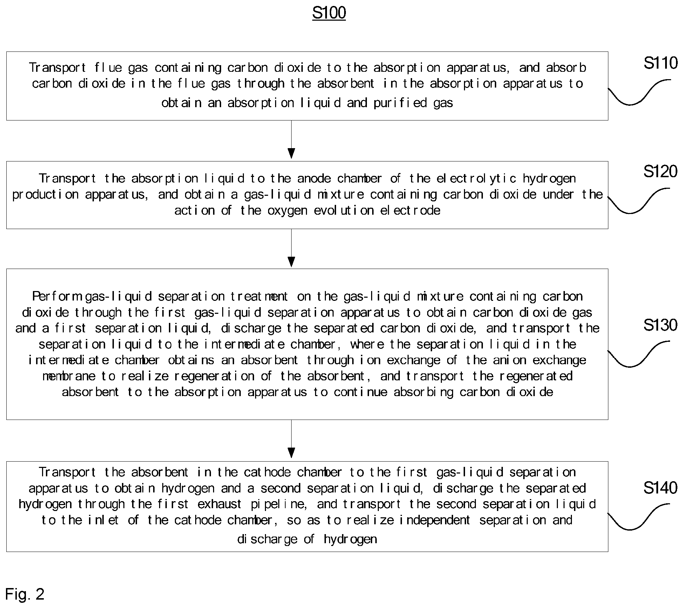

As shown in Fig. 2, another aspect of the present disclosure provides a flue gas carbon dioxide capture coupled with electrolytic hydrogen production method S100, employing the flue gas carbon dioxide capture coupled with electrolytic hydrogen production system described above. The specific structure of the flue gas carbon dioxide capture coupled with electrolytic hydrogen production system has been described in detail above and will not be repeated here. The method S100 includes the following steps.

At S110, flue gas containing carbon dioxide is transported to the absorption apparatus, and carbon dioxide in the flue gas is absorbed through the absorbent in the absorption apparatus to obtain an absorption liquid and purified gas.

Alternatively, the ammonia-containing solution absorbent in the absorption apparatus 1 may contain a supporting electrolyte. The supporting electrolyte can be substances such as potassium chloride, sodium chloride, sodium sulfate, etc. In addition, some additives, such as surfactants like tetraethylammonium chloride and tetrapropylammonium chloride, can also be added to the absorbent in the absorption unit 1. The absorption liquid is a liquid with a high carbon dioxide load obtained after the absorbent absorbs carbon dioxide, and the purified gas refers to the gas obtained after carbon dioxide is removed from the flue gas.

At S120, the absorption liquid is transported to the anode chamber of the electrolytic hydrogen production apparatus, and a gas-liquid mixture containing carbon dioxide is obtained under the action of the oxygen evolution electrode.

Alternatively, the absorption liquid enters the anode chamber 21 through the absorption liquid pipeline 51. Oxygen is generated at the oxygen evolution electrode of the anode chamber 21. The oxygen evolution electrode undergoes the reaction: 4OH⁻-4e-=O²↑+2H₂O, and the hydrogen evolution electrode undergoes the reaction: 4H₂O+4e₋=2H₂↑+4OH⁻. The concentration of OH⁻ near the oxygen evolution electrode decreases, the acidity of the reaction liquid increases, and CO₂ is desorbed to obtain a gas-liquid mixture containing carbon dioxide.

At S130, gas-liquid separation treatment is performed on the gas-liquid mixture containing carbon dioxide through the first gas-liquid separation apparatus to obtain carbon dioxide gas and a first separation liquid, the separated carbon dioxide is discharged, and the separation liquid is transported to the intermediate chamber, where the separation liquid in the intermediate chamber obtains an absorbent through ion exchange of the anion exchange membrane to realize regeneration of the absorbent, and the regenerated absorbent is transported to the absorption apparatus to continue absorbing carbon dioxide.

Alternatively, the gas-liquid mixture containing carbon dioxide in the anode chamber 21 is transported to the first gas-liquid separation apparatus 3 through the gas-liquid mixture pipeline 52 for separation to obtain carbon dioxide gas and the first separation liquid. The first separation liquid enters the intermediate chamber 22 through the first separation liquid pipeline 53. OH- generated by the hydrogen evolution cathode enters the intermediate chamber 22 through the anion exchange membrane 24. The alkalinity of the solution in the intermediate chamber 22 increases to obtain an absorbent, realizing regeneration of the absorbent. The regenerated absorbent enters the absorption apparatus 1 from the intermediate chamber 22 through the absorbent pipeline 54 to continue providing absorbent for the absorption apparatus 1 and continue realizing absorption of carbon dioxide.

At S140, the hydrogen-containing solution in the cathode chamber is transported to the first gas-liquid separation apparatus to obtain hydrogen and a second separation liquid, the separated hydrogen is discharged through the first exhaust pipeline, and the second separation liquid is transported to the inlet of the cathode chamber, so as to realize independent separation and discharge of hydrogen.

In some embodiments, the second gas-liquid separation apparatus 4 is a gas-liquid separator, and the gas-liquid separator separates and purifies a solution containing hydrogen to obtain purified hydrogen. Alternatively, the hydrogen-containing solution generated in the cathode chamber 23 is transported to the second gas-liquid separation apparatus 4 through the hydrogen-containing solution pipeline 55. The second gas-liquid separation apparatus 4 performs purified separation on the hydrogen-containing solution to obtain hydrogen and the second separation liquid, where the obtained hydrogen is discharged through the first exhaust pipeline 57 for next-step hydrogen collection. The obtained second separation liquid enters the cathode chamber 23 again through the second gas-liquid separation apparatus 4 to perform hydrogen preparation and separation purification again, realizing independent separation and discharge of hydrogen.

In the flue gas carbon dioxide capture coupled with electrolytic hydrogen production method of the present disclosure, the absorption and capture process of carbon dioxide in flue gas is coupled with the electrolytic hydrogen production process. While capturing carbon dioxide, hydrogen is purified and collected, thereby improving energy efficiency, saving energy, reducing operating costs, and conforming to the concept of green environmental protection. The purification and collection of hydrogen are performed separately in the cathode chamber and do not participate in the carbon dioxide capture system. This avoids the risk of explosion caused by hydrogen mixing with the absorption liquid, entering the anode chamber, and mixing with oxygen, thus increasing safety in the carbon dioxide capture and hydrogen production processes.

It is understandable that the above embodiments are merely exemplary embodiments adopted to illustrate the principles of the present disclosure. However, the present disclosure is not limited thereto. For those of ordinary skill in the art, various modifications and improvements can be made without departing from the spirit and essence of the present disclosure. These modifications and improvements are also regarded as the protection scope of the present disclosure.

## Claims

1. An electrochemical carbon dioxide capture system coupled with high-purity hydrogen preparation, comprising an absorption apparatus, an electrolytic hydrogen production apparatus, a first gas-liquid separation apparatus, and a second gas-liquid separation apparatus;
an absorbent is provided in the absorption apparatus and is used for absorbing carbon dioxide, and the electrolytic hydrogen production apparatus comprises an anode chamber, an intermediate chamber, and a cathode chamber which are separated by an anion exchange membrane, wherein the anode chamber employs an oxygen evolution electrode, and the cathode chamber employs a hydrogen evolution electrode;
a first inlet of the absorption apparatus is configured to communicate with flue gas containing carbon dioxide, a first outlet of the absorption apparatus communicates with an inlet of the anode chamber through an absorption liquid pipeline, an outlet of the anode chamber communicates with an inlet of the first gas-liquid separation apparatus through a gas-liquid mixture pipeline, a first outlet of the first gas-liquid separation apparatus communicates with an inlet of the intermediate chamber through a first separation liquid pipeline, and an outlet of the intermediate chamber communicates with a second inlet of the absorption apparatus through an absorbent pipeline, so as to realize a regeneration cycle of the absorbent;
an inlet of the second gas-liquid separation apparatus communicates with an outlet of the cathode chamber through a hydrogen-containing solution pipeline, a first outlet of the second gas-liquid separation apparatus communicates with an inlet of the cathode chamber through a second separation liquid pipeline, and a second outlet of the second gas-liquid separation apparatus communicates through a first exhaust pipeline, so as to realize independent separation and discharge of hydrogen; and
a second outlet of the first gas-liquid separation apparatus communicates with a second exhaust pipeline to discharge the separated carbon dioxide, and a second outlet of the absorption apparatus communicates with a purified gas pipeline to discharge purified gas.

2. The system according to claim 1, wherein the second gas-liquid separation apparatus is a gas-liquid separator, and the gas-liquid separator separates and purifies a solution containing hydrogen to obtain purified hydrogen.

3. The system according to claim 1, wherein the first gas-liquid separation apparatus comprises a flash tank and a condenser;
a gas-liquid mixture inlet of the flash tank communicates with the outlet of the anode chamber,
a gas-to-be-condensed inlet of the condenser communicates with a gas-to-be-condensed outlet of the flash tank, a condensed liquid inlet of the flash tank communicates with a condensed liquid outlet of the condenser, and the inlet of the intermediate chamber communicates with a separation liquid outlet of the flash tank; and
a top of the condenser communicates with the second exhaust pipeline to discharge the separated carbon dioxide.

4. The system according to any one of claims 1 to 3, further comprising a washing apparatus;
a first inlet of the washing apparatus communicates with the second outlet of the absorption apparatus through the purified gas pipeline;
a second inlet of the washing apparatus is configured to communicate with a washing water source; and
a first outlet of the washing apparatus communicates with a gas discharge pipeline.

5. The system according to claim 4, further comprising a desulfurization apparatus;
a first inlet of the desulfurization apparatus is configured to communicate with flue gas containing carbon dioxide, and a first outlet of the desulfurization apparatus communicates with the first inlet of the absorption apparatus;
a second inlet of the desulfurization apparatus communicates with a second outlet of the washing apparatus; and
a reflux outlet of the desulfurization apparatus communicates with a reflux inlet of the washing apparatus.

6. The system according to claim 5, further comprising a recovery apparatus;
an inlet of the recovery apparatus communicates with the reflux outlet of the desulfurization apparatus, so as to transport liquid substances in the desulfurization apparatus to the recovery apparatus for processing when a desulfurization liquid in the desulfurization apparatus reaches saturation.

7. The system according to claim 5, further comprising a first heat exchange apparatus;
the first heat exchange apparatus communicates with the washing apparatus and the desulfurization apparatus respectively, and is configured for heat exchange between the washing apparatus and the desulfurization apparatus.

8. The system according to any one of claims 1 to 3, further comprising a second heat exchange apparatus;
the second heat exchange apparatus communicates with the absorption apparatus and the electrolytic hydrogen production apparatus respectively, and is configured for heat exchange between the absorption apparatus and the electrolytic hydrogen production apparatus.

9. The system according to claim 8, wherein the second heat exchange apparatus comprises a cold end inlet, a cold end outlet, a hot end inlet, and a hot end outlet;
the cold end inlet of the second heat exchange apparatus communicates with the second outlet of the absorption apparatus, the hot end outlet of the second heat exchange apparatus communicates with the inlet of the anode chamber, the hot end inlet of the second heat exchange apparatus communicates with the outlet of the intermediate chamber, and the cold end outlet of the second heat exchange apparatus communicates with the second inlet of the absorption apparatus.

10. A flue gas carbon dioxide capture coupled with electrolytic hydrogen production method, wherein the flue gas carbon dioxide capture coupled with electrolytic hydrogen production system according to any one of claims 1 to 9 is employed, the method comprising:
transporting flue gas containing carbon dioxide to the absorption apparatus, and absorbing carbon dioxide in the flue gas through the absorbent in the absorption apparatus to obtain an absorption liquid and purified gas;
transporting the absorption liquid to the anode chamber of the electrolytic hydrogen production apparatus, and obtaining a gas-liquid mixture containing carbon dioxide under the action of the oxygen evolution electrode;
performing gas-liquid separation treatment on the gas-liquid mixture containing carbon dioxide through the first gas-liquid separation apparatus to obtain carbon dioxide gas and a first separation liquid, discharging the separated carbon dioxide, and transporting the separation liquid to the intermediate chamber, wherein the separation liquid in the intermediate chamber obtains an absorbent through ion exchange of the anion exchange membrane to realize regeneration of the absorbent, and transporting the regenerated absorbent to the absorption apparatus to continue absorbing carbon dioxide; and
transporting the hydrogen-containing solution in the cathode chamber to the first gas-liquid separation apparatus to obtain hydrogen and a second separation liquid, discharging the separated hydrogen through the first exhaust pipeline, and transporting the second separation liquid to the inlet of the cathode chamber, so as to realize independent separation and discharge of hydrogen.
